# EUROPÄISCHE PATENTSCHRIFT

(11) **EP 1 520 006 B1**
(45) Veröffentlichungstag und Bekanntmachung des Hinweises auf die Patenterteilung: **03.01.2007**
(21) Anmeldenummer: 03762478.0
(22) Anmeldetag: 14.05.2003
(51) Int. Cl.: C12C 11/00

(54) **HERSTELLUNG VON BIER UNTER VERWENDUNG VON CHAMPAGNERHEFEN**
PRODUCTION OF BEER WITH THE AID OF CHAMPAGNE YEAST
PRODUCTION DE BIERE AVEC UTILISATION DE LEVURE DE CHAMPAGNE

(30) Priorität: 05.07.2002 DE 10230256
(43) Veröffentlichungstag der Anmeldung: 06.04.2005
(73) Patentinhaber: Brauhaus Pfaffenhofen A/ILM Urban GmbH & Co. KG, 85276 Pfaffenhfen (DE)
(72) Erfinder: SCHÄTZ, Siegfried, 85276 Pfaffenhofen (DE); FRIEDRICH, Gerhard, 86399 Bobingen (DE)
(74) Vertreter: Helbing, Jörg
(86) Internationale Anmeldenummer: PCT/EP2003/005053
(87) Internationale Veröffentlichungsnummer: WO 2004/005449

(56) Entgegenhaltungen:
- EP-A- 0 652 284
- US-A1- 2001 043 965
- CONRAD SEIDL: "Die Millenniums-Sude [Artikel im Original in: "Der Standard"]" INTERNET, [Online] 3. Dezember 1999 (1999-12-03), XP002252321 Gefunden im Internet: <URL:http://student.ifs.tuwien.ac.at/~elan /ando/dl/files_cleaned/19991203.215.HTM> [gefunden am 2003-08-25]
- DATABASE WPI Section Ch, Week 199343 Derwent Publications Ltd., London, GB; Class D16, AN 1993-338903 XP002252322 & JP 05 244924 A (KIRIN BREWERY KK), 24. September 1993 (1993-09-24)

## Beschreibung

Die vorliegende Erfindung betrifft ein Verfahren zur Herstellung eines Bieres umfassend einen obergärigen und oder untergärigen Gärschritt in Gegenwart einer Wein-, Sekt- oder Champagnerhefe sowie ein Bier, das mit diesem Verfahren herstellbar ist.

### Hintergrund der Erfindung

Bier ist ein Getränk aus einer teilweise oder nahezu vollständig vergorenen Stammwürze.

Zu Herstellung der Würze wird zunächst eine Maische bestehend aus Getreidemalz und Wasser gebildet. Zur Malzbereitung werden vorwiegend Weizen und/oder Gerste verwendet. Das Maischen dient dem Aufschluß des Getreides d.h. der enzymatischen Spaltung der im Getreide enthaltenen Kohlenhydrate in kleinere, für die Hefen vergärbare Einheiten durch die während des Malzbereitung freigesetzten Enzyme. Hierzu wird die Maische verschiedenen Temperaturen ausgesetzt (Temperaturprogramm). Dies dient dazu, den verschiedenen anwesenden Enzyme optimale Reaktionsbedingungen zu bieten. Nach Abtrennung der Feststoffe (genannt "Abläutern") erhält man die Würze, welche dann im Kessel unter Zugabe von Hopfen gekocht wird.

Bei der Vergärung der Würze mit herkömmlichen Brauereihefen, auch Betriebshefen genannt, werden je nach Hefetyp und Gärprozessführung untergärige oder obergärige Biere erhalten. Bei der Herstellung von untergärigen Bieren setzt sich die Hefe gegen Ende der Hauptgärung am Boden des Gärgefäßes ab und die Temperaturen während des Gärvorganges liegen bei unter 10 °C. Sie sind somit niedriger als bei der Herstellung obergäriger Biere, wobei die Temperaturen mehr als 10 °C betragen und die eingesetzten Hefen sich gegen Ende der Hauptgärung an der Oberfläche des Bieres ansammeln.

Zur Erzielung eines bestimmten Geschmackes des Bieres ist der Fachmann (z. B. in Deutschland aufgrund des deutschen Reinheitsgebotes) für Bier auf die individuelle Gestaltung des Brauverfahrens und insbesondere des Gärprozesses beschränkt, da ihm üblicherweise andere Zutaten als Getreidemalz, Wasser, Hopfen und Hefe nicht gestattet sind. Eine Zumischung anderer Quellen vergärbarer Zucker erfolgt nicht. Andererseits ist es im Hinblick auf die gesundheitliche Verträglichkeit des Lebensmittels Bier vorteilhaft, die Verwendung künstlich hergestellter Zuschlags- und Geschmacksstoffe zur Geschmacksveränderung zu vermeiden. Bei der Beschränkung auf Betriebshefen ist der typische Geschmack des Bieres jedoch nur in engen Grenzen variierbar.

Eine Alternative bietet sich jedoch mit Hefen an, die nicht zu den typischen Brauereihefen zu zählen sind wie Wein-, Sekt- und Champagnerhefen, die bei der Herstellung von Wein, Sekt und Champagner eingesetzt werden.

Solche Hefen wurden bereits zur Herstellung eines untergärigen Bieres von der Karlsbergbrauerei eingesetzt, wobei der Zusatz einer Sekthefe in einem zweiten, dem Hauptgärschritt nachgeschalteten Gärungsschritt erfolgte. Auch die Edelweissbrauerei Farny vertreibt ein "Schampus" genanntes Bier, das unter Verwendung einer Champagnerhefe hergestellt wird.

In der EP-B-0 652 284 wird darüber hinaus ein Gärverfahren beschrieben, in dem eine untergärige Gerstenmalzwürze in Gegenwart von fermentierbaren Zuckern durch eine Champagnerhefe umgesetzt wird. Es handelt sich hierbei nicht um ein Brauverfahren nach dem deutschen Reinheitsgebot.

Ein Problem bei der Verwendung von Wein-, Sekt- und Champagnerhefen für die Herstellung von Bieren besteht jedoch darin, dass viele dieser Hefen bei einer Vergärung mit dem Substrat Würze einen unangenehmen, faulig bis essigartigen Geschmack ergeben. Daneben ist bekannt, dass Wein-, Sekt- und Champagnerhefen die beim Maischen gebildeten Zucker (Maltotriosen) nur unvollständig vergären und teilweise auch zusätzlich vergärbare Zuckerquellen benötigen.

Im Lichte des vorstehend Gesagten besteht immer noch Bedarf an geschmacklicher Veränderung bei obergärigen und untergärigen Bieren, insbesondere bei solchen, die nach dem deutschen und insbesondere dem noch strengeren bayerischen Reinheitsgebot gebraut sind.

### Kurze Zusammenfassung der Erfindung

Überraschenderweise wurde nun gefunden, dass bestimmte Wein-, Sekt- oder Champagnerhefen durchaus im Herstellungsverfahren eines obergärigen oder untergärigen Bieres, und zwar im obergärigen Hauptgärschritt eingesetzt werden können. Die vorliegende Erfindung betrifft somit
(1) ein Verfahren zur Herstellung eines Bieres, umfassend das Umsetzen einer Würze in einem obergärigen und/oder untergärigen Hauptgärschritt mit einer ober- bzw. untergärigen Betriebshefe in Gegenwart wenigstens einer Wein-, Sekt- oder Champagnerhefe ohne Zugabe von anderen Quellen vergärbarer Zucker;
(2) in einer bevorzugten Ausfürhungsform des Verfahrens (1) ist das Bier ein obergäriges Bier und die Würze ist eine obergärige Würze;
(3) in einer bevorzugten Ausführungsform des Verfahrens (2), erfolgt weiterhin ein Nachgärschritt unter Zusatz von Speise und optional unter Zusatz wenigstens einer weiteren Champagnerhefe;
(4) in einer bevorzugten Ausführungsform des Verfahrens (1) ist das Bier ein untergäriges Bier und die Würze eine untergärige Würze; und
(5) ein Bier, das durch ein in (1) bis (4) beschriebenen Verfahren herstellbar ist.

### Detaillierte Beschreibung der Erfindung

Die in dem Verfahren (1) eingesetzte Würze ist vorzugsweise eine Würze aus 100 % Weizenmalz oder 100 % Gerstenmalz und/oder anderen Malzen, und/oder Mischungen daraus, die zur Bierherstellung geeignet sind. Ein Vermischen der Würze mit anderen Quellen vergärbarer Zucker ist ausgeschlossen.

Die in dem Verfahren (2) eingesetzte obergärige Würze ist vorzugsweise eine Weissbier- oder Weizenbierwürze aus Weizenmalz oder einem Gemisch aus Weizenmalz und einer anderen Malzsorte, insbesondere Gerstenmalz, Dinkelmalz und/oder einem anderen Malz, das sich zur Bierherstellung eignet. Bei den Malzgemischen beträgt der Weizenmalzanteil vorzugsweise wenigstens 30 Gew.-%, besonders bevorzugt wenigstens 50 Gew.-%. Obergärige Würzen auf Gerstenmalzbasis können ebenfalls eingesetzt werden.

Die in dem Hauptbrauschritt der Ausführungsform (2) eingesetzte Wein-, Sekt- oder Champagnerhefe (nachfolgend auch "erste Champagnerhefe") ist vorzugsweise eine obergärige Champagnerhefe, insbesondere eine Champagnerhefe, die mit anderen für das Brauverfahren eingesetzten Hefen verträglich (kompatibel) ist. Dies bedeutet, dass solch eine Hefe keine für die anderen Hefen toxischen Metaboliten generiert. Geeignete Champagnerhefen, die diese Erfordernis erfüllen sind dabei Bayanus Hefen (*Saccharomyces bayanus*) und insbesondere solche, die im Wesentlichen das in Tabelle 1A gezeigte Hefespektrum aufweisen wie z. B. der Hefestamm Urbanus 1.

In dem Verfahren gemäß Ausführungsform (2) wird in dem obergärigen Brauschritt neben der Champagnerhefe eine obergärige Betriebshefe wie z. B. Hefen vom Typ 68, 127, 149, 175 oder 177 (erhältlich bei der Hefebank der Universität Weihenstephan) verwendet, wobei eine Betriebshefe vom Typ 68 oder 175 besonders bevorzugt ist. Weiterhin ist bevorzugt, dass der Hauptgärschritt bei einer Temperatur von 10 bis 28, vorzugsweise von 15 bis 25 °C durchgeführt wird. Ein geeigneter Stammwürzegehalt der Würze im Sinne des erfindungsgemäßen Verfahrens beträgt 6 bis 18, vorzugsweise 9 bis 13 Gew.-% vergärbarer Extrakt.

Gemäß Ausführungsform (3) der Erfindung umfasst das erfindungsgemäße Verfahren weiterhin einen Nachgärschritt unter Zusatz von "Speise". Die "Speise" im Sinne der vorliegenden Erfindung kann dabei eine "Kräuse" oder ein "Kräusenbier" (d. h. ein obergäriges und/oder untergäriges Jungbier (in Gärung befindlicher Würze), das noch einen hohen vergärbaren Restextrakt aufweist und in dem sich die Hefe im exponentiellen Wachstumsstadium befindet) und/oder eine nicht vergorene, mit Hefe versehene, ober- und/oder untergärige Würze oder dergleichen sein. Besonders bevorzugt ist ein untergäriges Kräusenbier auf Basis von Gerstenmalz. Im genannten Nachgärschritt wird vorzugsweise wenigstens eine weitere Wein-, Sekt- oder Champagnerhefe (nachfolgend auch kurz "zweite Champagnerhefe" genannt) eingesetzt. Diese zweite Champagnerhefe ist vorzugsweise ebenfalls eine obergärige Champagnerhefe (Bayanus Hefe, *Saccharomyces bayanus*), insbesondere eine solche , die die in Tabelle 1B gezeigte Hefespektren aufweist. Dies ist z. B. die Hefe des Hefestamms Urbanus 2. Die in dem erfindungsgemässen Verfahren einsetzbaren "ersten" und "zweiten" Champagnerhefen sind solche, die mit dem Substrat obergäriger Würze einen fruchtig-bierigen Geschmack mit deutlicher weinig-sektiger Komponente im Nachtrunk und im Geruch erzeugen.

Es ist dabei besonders bevorzugt, dass in dem Nachgärschritt neben der Champagnerhefe wenigstens eine ober- und/oder untergärige Betriebshefe verwendet wird, insbesondere eine untergärige Betriebshefe (Bruchhefe) vom Typ 34/70, 34/78, 44, 120, 128, 168, 172, 194 oder 199 bzw. eine untergärige Betriebshefe (Staubhefe) vom Typ 66, 71 oder 167 (alle Hefen erhältlich bei der Hefebank der Universität Weihenstephan). Weiterhin ist bevorzugt, dass der Nachgärschritt bei einer Temperatur von 10 bis 28, vorzugsweise von 15 bis 25 °C durchgeführt wird. Weiterhin ist bevorzugt, dass der Anteil der Speise bzw. des Kräusenbiers am Gesamtnachgärvolumen 5 bis 20 vorzugsweise 8 bis 15 Vol.-% beträgt. Weiterhin ist bevorzugt, dass der CO₂-Gehalt des obergärigen Bieres 3 bis 12, vorzugsweise 6 bis 9 g/l beträgt.

Die in dem Hauptgärschritt der Ausführungsform (4) der Erfindung eingesetzte erste Champagnerhefe ist vorzugsweise eine solche, wie vorstehend in Ausführungsform (2) definiert. In dem Verfahren wird in dem untergärigen Brauschritt neben der Champagnerhefe noch eine untergärige Betriebshefe wie untergärige Betriebshefe vom Typ 34/70, 34/78, 44, 120, 128, 168, 172, 194, 199 bzw. eine untergärige Betriebshefe (Staubhefe) vom Typ 66, 71, 167, insbesondere vom Typ 34/70 eingesetzt.

Der Hauptgärschritt wird bei einer Temperatur von 5 bis 28, vorzugsweise von 10 bis 20 °C durchgeführt. Es ist bevorzugt, dass der Stammwürzegehalt der Würze vor der Vergärung 6 bis 18, vorzugsweise 9 bis 14 Gew.-% vergärbarer Extrakt beträgt.

Weiterhin kann das Verfahren (4) noch einen Nachgärschritt aufweisen. Dieser findet vorzugsweise unter den selben Bedingungen statt wie der Nachgärschritt des obergärigen Verfahrens (3).

**Tabelle I**

| Probe | A: Urbanus 1 | B: Urbanus 2 |
|---|---|---|
| 1. Glucose | ++ | + |
| 2. Galactose | ++ | - |
| 3. Saccharose | ++ | ++ |
| 4. Maltose | ++ | ++ |
| 5. Cellobiose | - | - |
| 6. Trehalose | - | - |
| 7. Lactose | - | - |
| 8. Melibiose | - | - |
| 9. Raffinose | ++ | + |
| 10. Melizitose | - | - |
| 11. Inulin | + | - |
| 11b. Dextrin | - | - |
| 12. Glucose | ++ | ++ |
| 13. Galactose | ++ | - |
| 14. Sorbose | - | - |
| 15. Saccharose | ++ | ++ |
| 16. Maltose | ++ | ++ |
| 17. Cellobiose | - | - |
| 18. Trehalose | - | + |
| 19. Lactose | - | - |
| 20. Melibiose | - | - |
| 21. Raffinose | ++ | + |
| 22. Melizitose | s+ | - |
| 23. Inulin | + | - |
| 24. Stärke | - | - |
| 25. Xylose | - | - |
| 26. L-Arabinose | - | - |
| 27. D-Arabinose | - | - |
| 28. Ribose | - | - |
| 29. Rhamnose | - | - |
| 30. Ethanol | s+ | s+ |
| 31. Glycerin | - | - |
| 32. Erythrit | - | - |
| 33. Ribit | | |
| 34. Mannit | - | - |
| 35. Sorbit | - | - |
| 36. A-M-D-Glucosid | - | - |
| 37. Salicin | - | - |
| 38. Milchsäure | - | s+ |
| 39 Bernsteinsäure | - | - |
| 40. Zitronensäure | - | - |
| 41. Inosit | - | - |
| 42. Asculin | - | - |
| 43. Nitrat | - | s+ |
| 44. vitaminfreies M. | s- | + |
| 45. 37 °C | + | + |
| 46. 50 % Glucoseagar | - | - |
| 47. Cyclohexminid | | |
| = 100 nnm | - | - |
| = 1000 nnm | - | - |
| 48. YNB | - | - |
| 49.L-Lysinagar | - | - |
| 50. Kristallviolettagar | - | - |

Durch das erfindungsgemäße Verfahren wird ein Bier mit einem fruchtig-bierigen Geschmack mit deutlicher weinig-sektiger Komponente im Nachtrunk und im Geruch erhalten.

Die Hefestämme Urbanus 1 und 2 wurden am 24.05.02 unter der Bezeichnung DSM 15017 (für Urbanus 1) bzw. DSM 15018 (für Urbanus 2) bei der DSMZ, Deutsche Sammlung von Mikroorganismen und Zellkulturen GmbH (Mascheroder Weg 1b, 38124 Braunschweig, DE) gemäss dem Budapester Vertrag hinterlegt.

Die Erfindung wird anhand des nachfolgenden Beispiels näher erläutert. Dieses darf jedoch nicht als Einschränkung des Umfangs der vorliegenden Erfindung ausgelegt werden.

### Beispiele

### Beispiel 1: Herstellung eines obergärigen Bieres unter Verwendung von Champagnerhefe

A. Herstellung einer obergärigen Würze: Einmaischwasser 112 hl mit 37 °C; Schüttung ges. 2300 kg (1835 kg Weizenmehl/410 kg Gerstenmalz/55 kg Caramalz)
   1. Die gesamte Maische wurde auf 58 °C aufgeheizt und dann getrennt (Maischeraster bei 62 °C/65 °C; Endverzuckerung 72 °C).
      Die Maische wurde auf 93 °C aufgeheizt und in den Maischbottich gepumpt (ergibt ca. 68 °C).
   2. Die Maische wurde mit bei 72 °C endverzuckerter Teilmaische auf 93 °C aufgeheizt. Das Abmaischen erfolgte auf ca. 76 °C.
      Nach einer Maischerast von 10 min erfolgte Abläutern der Vorderwürze (ca. 75 hl). 5 Nachgüsse mit je 13 hl ergaben eine Pfannevollmenge von 140 hl. Nach dem Aufheizen auf 98 °C erfolgte eine dynamische Kochung von insgesamt 60 min mit einer Gesamtverdampfung von ca. 5 %.
B. Hauptgärung: Es wurden ca. 134 hl Würze mit 12,7 Gew.-% über einen Whirlpool ausgeschlagen und nach einer Rast von 15 min auf 18 °C abgekühlt. Die abgekühlte und belüftete Würze wurde für 3 Stunden in den Flotationstank belassen und wurde mit 80 I obergäriger Betriebshefe vom Typ 68 (erhältlich von der Hefebank Weihenstephan) angestellt.
   Nach 6 Stunden Angärphase wurden in die offenen Gärgefäße 9 kg Champagnerhefe vom Typ Urbanus 1 nachgegeben. Die Hauptgärung dauerte ca. 96 Stunden bei einer Gärtemperatur von 18 - 23 °C.
C. Nachgärung: Nach beendeter Hauptgärung wurde vom offenen Gärbottich in einen Drucktank umgelagert. Im Drucktank werden auf ca. 130 hl Weizenjungbier 20 hl untergäriges Kräusenbier mit Hefe vom Typ 34/70 (erhältlich von der Hefebank Weihenstephan) gegeben. Nach einer Angärphase von 6 Stunden wurde 9 kg Champagnerhefe vom Typ Urbanus 2 zugegeben. Diese Nachgärung im Drucktank dauert dann 7 Tage bei einer Temperatur von 22 - 23 °C. Anschließend wurde in einem Zeitraum von 7 Tagen auf +1 - +2 °C abgekühlt und der CO₂-Gehalt auf 8 - 8,5 g/l eingestellt.

Das fertige Bier wurde unfiltriert, teilfiltriert oder filtriert auf Flaschen abgefüllt.

### Beispiel 2: Herstellung eines untergärigen Bieres unter Verwendung von Champagnerhefe

A. Herstellung einer untergärigen Würze: Einmaischen 112 hl mit 37 °C; Schüttung ges. 2300 kg Gerstenmalz und/oder einem Gemisch von Malzen, die zur Bierherstellung geeignet sind.
   1. Die gesamte Maische wurde auf 58 °C aufgeheizt und dann getrennt (Maischeraster bei 62 °C/65 °C; Endverzuckerung 72 °C).
   2. Die Maische wurde mit bei 72 °C endverzuckerter Teilmaische auf 93 °C aufgeheizt. Das Abmaischen erfolgte auf ca. 76 °C.
   Nach einer Maischerast von 10 min erfolgte Abläutern der Vorderwürze (ca. 75 hl). 5 Nachgüsse mit je 13 hl ergaben eine Pfannevollmenge von 140 hl. Nach dem Aufheizen auf 98 °C erfolgte eine dynamische Kochung von insgesamt 60 min mit einer Gesamtverdampfung von ca. 5 %.
B. Hauptgärung: Es wurden ca. 134 hl Würze mit 12,7 Gew.-% über einen Whirlpool ausgeschlagen und nach einer Rast von 15 min auf 18 °C abgekühlt. Die abgekühlte und belüftete Würze wurde für 3 Stunden in den Flotationstank belassen und wurde mit 80 I obergäriger Betriebshefe vom Typ 34/70 (erhältlich von der Hefebank Weihenstephan) sowie Champagnerhefe, vorzugsweise Urbanus 1, angestellt.
C. Nachgärung: Nach beendeter Hauptgärung wurde vom offenen Gärbottich in einen Drucktank umgelagert. Im Drucktank werden auf ca. 130 hl Jungbier 20 hl untergäriges Kräusenbier mit Hefe vom Typ 34/70 (erhältlich von der Hefebank Weihenstephan) gegeben. Nach einer Angärphase von 6 Stunden wurde 9 kg Champagnerhefe vom Typ Urbanus 2 zugegeben. Diese Nachgärung im Drucktank dauert dann 7 Tage bei einer Temperatur von 5 - 23 °C. Anschließend wurde in einem Zeitraum von 7 Tagen auf +1 - +2 °C abgekühlt und der CO₂-Gehalt auf 8 - 8,5 g/l eingestellt.

Das fertige Bier wurde unfiltriert, teilfiltriert oder filtriert auf Flaschen abgefüllt.

## Patentansprüche

1. Verfahren zur Herstellung eines Bieres, umfassend das Umsetzen einer Würze in einem obergärigen und/oder untergärigen Hauptgärschritt mit einer obergärigen und/oder untergärigen Betriebshefe in Gegenwart wenigstens einer Wein-, Sekt- oder Champagnerhefe ohne Zugabe von anderen Quellen vergärbarer Zucker.

2. Verfahren nach Anspruch 1, wobei die Würze eine obergärige und/oder untergärige Würze aus 100 % Weizenmalz und/oder 100 % Gerstenmalz oder anderen Malzen und/oder Mischungen daraus ist, die zur Bierherstellung geeignet ist.

3. Verfahren nach Anspruch 1 oder 2, wobei das Bier ein obergäriges Bier ist und die Würze eine obergärige Würze ist, wobei insbesondere die obergärige Würze eine Weißbier- oder Weizenbierwürze aus Weizenmalz oder einem Gemisch aus Weizenmalz und einer anderen Malzsorte, insbesondere Gerstenmalz, Dinkelmalz und/oder einem anderen Malz, das sich zur Bierherstellung eignet, oder eine Würze aus Gerstenmalz oder einem Gemisch aus Gerstenmalz mit einer anderen der vorstehend genannten Malzsorten ist,
und wobei vorzugsweise
(i) als Wein-, Sekt- oder Champagnerhefe eine obergärige Wein-, Sekt- oder Champagnerhefe, insbesondere eine Wein-, Sekt- oder Champagnerhefe, die mit den anderen im Brauverfahren eingesetzten Hefen, insbesondere der obergärigen Betriebshefe des Hauptgärschrittes verträglich ist und insbesondere keine für die andere Hefen toxischen Metaboliten generiert, eingesetzt wird; und/oder
(ii) Wein-, Sekt- oder Champagnerhefe mit dem Substrat obergäriger Würze einen fruchtig-bierigen Geschmack mit deutlicher weinig-sektiger Komponente im Nachtrunk und im Geruch erzeugt;
und wobei besonders bevorzugt die Wein-, Sekt- oder Champagnerhefe eine obergärige Champagnerhefe, insbesondere eine Champagnerhefe, die das in Tabelle 1A gezeigte Hefespektrum aufweist, ist, und weiterhin bevorzugt Hefestamm Urbanus 1 (DSM 15017) eingesetzt wird.

4. Verfahren nach Anspruch 3, wobei
(i) die in dem obergärigen Hauptgärschritt eingesetzte obergärige Betriebshefe vom Typ 68, 127, 149, 175 oder 177 ist, insbesondere eine Betriebshefe vom Typ 68 oder 175 ist; und/oder
(ii) wobei der Hauptgärschritt bei einer Temperatur von 10 bis 28, vorzugsweise von 17 bis 25 °C durchgeführt wird; und/oder
(iii) wobei der Stammwürzegehalt der Würze vor der Vergärung 6 bis 18, vorzugsweise 9 bis 13 Gew.-% vergärbarer Extrakt beträgt.

5. Verfahren nach Anspruch 3 oder 4, umfassend einen Nachgärschritt unter Zusatz einer Speise, vorzugsweise unter Zusatz von ober- und/oder untergärigem Kräusenbier und/oder unter Zusatz einer nicht vergorenen, ober- und/oder untergärigen, mit Hefe versetzten Würze, besonders bevorzugt unter Zusatz von untergärigem Kräusenbier auf Basis von Gerstenmalz; und wobei besonders bevorzugt
(i) der Nachgärschritt unter Zusatz wenigstens einer weiteren Wein-, Sekt oder Champagnerhefe, vorzugsweise einer obergärigen Wein-, Sekt- oder Champagnerhefe, die mit dem Substrat obergäriger Würze einen fruchtig-bierigen Geschmack mit deutlicher weinig-sektiger Komponente im Nachtrunk und im Geruch erzeugt, erfolgt; oder
(ii) die Wein-, Sekt oder Champagnerhefe eine obergärige Champagnerhefe, vorzugsweise eine Champagnerhefe, die das in Tabelle 1B gezeigte Hefespektrum aufweist, und besonders bevorzugt Hefestamm Urbanus 2 (DSM 15018) ist.

6. Verfahren nach Anspruch 4 oder 5, wobei
(i) in dem Nachgärschritt neben der Champagnerhefe wenigstens eine ober- und/oder untergärige Betriebshefe, insbesondere eine untergärige Betriebshefe vom Typ 34/70, 34/78, 44, 120, 128, 168, 172, 194, 199, 66, 71 oder 167 verwendet wird; und/oder
(ii) wobei der Nachgärschritt bei einer Temperatur von 10 bis 28, vorzugsweise von 15 bis 25 °C durchgeführt wird; und/oder
(iii) der Anteil der Speise oder des Kräusenbiers am Gesamtnachgärvolumen 5 bis 20, vorzugsweise 8 bis 15 Vol.-% beträgt; und/oder
(iv) der CO₂-Gehalt des obergärigen Bieres 3 bis 12, vorzugsweise 6 bis 9 g/l beträgt.

7. Verfahren nach Anspruch 1 oder 2, wobei das Bier ein untergäriges Bier ist und die Würze eine untergärige Würze ist,
und wobei vorzugsweise in dem untergärigen Hauptgärschritt neben der Champagnerhefe eine untergärige Betriebshefe eingesetzt wird.

8. Verfahren nach Anspruch 7, wobei
(i) als Wein-, Sekt- oder Champagnerhefe eine obergärige Wein-, Sekt oder Champagnerhefe, die mit den anderen im Brauverfahren eingesetzten Hefen, insbesondere der untergärigen Betriebshefe des Hauptgärschritts verträglich ist und insbesondere keine für die anderen Hefen toxischen Metaboliten generiert, eingesetzt wird; und/oder
(ii) Wein-, Sekt- oder Champagnerhefe mit dem Substrat untergäriger Würze einen fruchtig-bierigen Geschmack mit deutlicher weinig-sektiger Komponente im Nachtrunk und im Geruch erzeugt;
und wobei besonders bevorzugt die Wein-, Sekt- oder Champagnerhefe eine obergärige Champagnerhefe, vorzugsweise eine Champagnerhefe, die das in Tabelle 1A gezeigte Hefespektrum aufweist, und besonders bevorzugt Hefestamm Urbanus 1 (DSM 15017) ist.

9. Verfahren nach Anspruch 7 oder 8, wobei
(i) in dem untergärigen Hauptgärschritt eine untergärige Betriebshefe vom Typ 34/70, 34/78, 44, 120, 128, 168, 172, 194 oder 199 bzw. eine untergärige Betriebshefe (Staubhefe) vom Typ 66, 71 oder 167, insbesondere vom Typ 34/70 eingesetzt wird; und/oder
(ii) wobei der Hauptgärschritt bei einer Temperatur von 5 bis 28, vorzugsweise von 10 bis 20 °C durchgeführt wird; und/oder
(iii) wobei der Stammwürzegehalt der Würze vor der Vergärung 6 bis 18, vorzugsweise 9 bis 14 Gew.-% vergärbarer Extrakt beträgt.

10. Verfahren nach einem oder mehreren der Ansprüche 7 bis 9, umfassend einen Nachgärschritt unter Zusatz einer Speise, vorzugsweise unter Zusatz von untergärigem Kräusenbier und/oder unter Zusatz einer nicht vergorenen, mit Hefe versetzten Würze, besonders bevorzugt unter Zusatz von untergärigem Kräusenbier auf Basis von Gerstenmalz und/oder einem Gemisch daraus;
und wobei bevorzugt der Nachgärschritt unter Zusatz wenigstens einer weiteren Wein-, Sekt- oder Champagnerhefe, vorzugsweise einer obergärigen Wein-, Sekt- oder Champagnerhefe, die mit dem Substrat untergäriger Würze fruchtig-bierigen Geschmack mit deutlicher weinig-sektiger Komponente im Nachtrunk und im Geruch erzeugt, erfolgt;
und wobei besonders bevorzugt die Wein-, Sekt- oder Champagnerhefe eine obergärige Champagnerhefe, vorzugsweise eine Champagnerhefe, die das in Tabelle 1B gezeigt Hefespektrum aufweist, und besonders bevorzugt Hefestamm Urbanus 2 (DSM 15018) ist.

11. Verfahren nach Anspruch 10, wobei
(i) in dem Nachgärschritt neben der Champagnerhefe wenigstens eine untergärige Betriebshefe, insbesondere eine untergärige Betriebshefe vom Typ 34/70, 34/78, 44, 120, 128, 168, 172, 194, 199, 66, 71 oder 167 verwendet wird; und/oder
(ii) wobei der Nachgärschritt bei einer Temperatur von 5 bis 28, vorzugsweise von 10 bis 20 °C durchgeführt wird; und/oder
(iii) der Anteil der Speise oder des Kräusenbiers am Gesamtnachgärvolumen 5 bis 20, vorzugsweise 8 bis 14 Vol.-% beträgt; und/oder
(iv) der CO₂-Gehalt des untergärigen Bieres 3 bis 12, vorzugsweise 6 bis 9 g/l beträgt.

12. Verfahren nach einem oder mehreren der Ansprüche 3 bis 6 oder 7 bis 11, wobei das Bier nach Zugabe der Speise oder nach Beendigung des Nachgärschritts in Flaschen oder Fässer abgefüllt wird.

13. Bier, das durch ein Verfahren nach einem oder mehreren der Ansprüche 1 bis 12 herstellbar ist.

## Claims

1. A process for producing a beer, comprising reacting a wort in a top-fermenting and/or bottom-fermenting primary fermentation step with a top-fermenting and/or bottom-fermenting industrial yeast in the presence of at least one wine, sparkling wine or champaign yeast without adding other sources of fermentable sugars.

2. The process according to claim 1, wherein said wort is a top-fermenting and/or bottom-fermenting wort of 100% wheat malt and/or 100% barley malt or other malts and/or mixtures thereof which is suitable for beer production.

3. The process according to claim 1 or 2, wherein said beer is a top-fermented beer and said wort is a top-fermenting wort, wherein said top-fermenting wort is, in particular, a Weissbier or Weizenbier wort of wheat malt or a mixture of wheat malt and another malt type, especially barley malt, spelt malt and/or another malt suitable for beer production, or a wort of barley malt or a mixture of barley malt with another of the above mentioned malt types;
wherein preferably
(i) a top-fermenting wine, sparkling wine or champaign yeast, especially a wine, sparkling wine or champaign yeast compatible with the other yeasts employed in the brewing process, especially the top-fermenting industrial yeast of the primary fermentation step, and which, in particular, does not generate any metabolites toxic to the other yeasts is employed as said wine, sparkling wine or champaign yeast; and/or
(ii) said wine, sparkling wine or champaign yeast together with the substrate of top-fermenting wort produces a fruity-beery taste with a clearly perceptible wine/sparkling wine component in the finish and smell;
and wherein more preferably said wine, sparkling wine or champaign yeast is a top-fermenting champaign yeast, especially a champaign yeast which has the yeast spectrum as shown in Table 1A, and even more preferably yeast strain Urbanus 1 (DSM 15017) is employed.

4. The process according to claim 3, wherein:
(i) the top-fermenting industrial yeast employed in the top-fermenting primary fermentation step is of type 68, 127, 149, 175 or 177, especially an industrial yeast of type 68 or 175; and/or
(ii) said primary fermentation step is performed at a temperature of from 10 to 28 °C, preferably from 17 to 25 °C; and/or
(iii) the original wort content of the wort prior to fermentation is from 6 to 18%, preferably from 9 to 13%, by weight of fermentable extract.

5. The process according to claim 3 or 4, comprising a secondary fermentation step with the addition of a saved wort, preferably with the addition of top- and/or bottom-fermented krausen beer and/or with the addition of an unfermented top- and/or bottom-fermenting yeast-added wort, more particularly with the addition of bottom-fermented krausen beer on the basis of barley malt;
wherein more preferably
(i) said secondary fermentation step is effected with the addition of at least one further wine, sparkling wine or champaign yeast, preferably a top-fermenting wine, sparkling wine or champaign yeast which together with the substrate of top-fermenting wort produces a fruity-beery taste with a clearly perceptible wine/sparkling wine component in the finish and smell; or
(ii) said wine, sparkling wine or champaign yeast is a top-fermenting champaign yeast, preferably a champaign yeast which has the yeast spectrum as shown in Table 1B, and more preferably is yeast strain Urbanus 2 (DSM 15018).

6. The process according to claim 4 or 5, wherein:
(i) at least one top- and/or bottom-fermenting industrial yeast, especially a bottom-fermenting industrial yeast of type 34/70, 34/78, 44, 120, 128, 168, 172, 194, 199, 66, 71 or 167 is used in said secondary fermentation step in addition to said champaign yeast; and/or
(ii) said secondary fermentation step is performed at a temperature of from 10 to 28 °C, preferably from 15 to 25 °C; and/or
(iii) the proportion of said saved wort or krausen beer in the total secondary fermentation volume is from 5 to 20%, preferably from 8 to 15%, by volume; and/or
(iv) the CO₂ content of the top-fermented beer is from 3 to 12, preferably from 6 to 9, g/l.

7. The process according to claim 1 or 2, wherein said beer is a bottom-fermented beer and said wort is a bottom-fermenting wort, and wherein preferably a bottom-fermenting industrial yeast is employed in addition to said champaign yeast in said bottom-fermenting primary fermentation step.

8. The process according to claim 7, wherein:
(i) a top-fermenting wine, sparkling wine or champaign yeast which is compatible with the other yeasts employed in the brewing process, especially the bottom-fermenting industrial yeast of the primary fermentation step, and which, in particular, does not generate any metabolites toxic to the other yeasts is employed as said wine, sparkling wine or champaign yeast; and/or
(ii) said wine, sparkling wine or champaign yeast together with the substrate of bottom-fermenting wort produces a fruity-beery taste with a clearly perceptible wine/sparkling wine component in the finish and smell;
and wherein more preferably said wine, sparkling wine or champaign yeast is a top-fermenting champaign yeast, preferably a champaign yeast which has the yeast spectrum as shown in Table 1A, and more preferably yeast strain Urbanus 1 (DSM 15017).

9. The process according to claim 7 or 8, wherein:
(i) a bottom-fermenting industrial yeast of type 34/70, 34/78, 44, 120, 128, 168, 172, 194 or 199 or a bottom-fermenting industrial yeast (non-flocculating yeast) of type 66, 71 or 167, especially of type 34/70, is employed in said bottom-fermenting primary fermentation step; and/or
(ii) said primary fermentation step is performed at a temperature of from 5 to 28 °C, preferably from 10 to 20 °C; and/or
(iii) the original wort content of the wort prior to fermentation is from 6 to 18%, preferably from 9 to 14%, by weight of fermentable extract.

10. The process according to one or more of claims 7 to 9, comprising a secondary fermentation step with the addition of a saved wort, preferably with the addition of bottom-fermented krausen beer and/or with the addition of an unfermented yeast-added wort, more preferably with the addition of bottom-fermented krausen beer on the basis of barley malt and/or a mixture thereof;
and wherein preferably said secondary fermentation step is effected with the addition of at least one further wine, sparkling wine or champaign yeast, preferably a top-fermenting wine, sparkling wine or champaign yeast which together with the substrate of bottom-fermenting wort produces a fruity-beery taste with a clearly perceptible wine/sparkling wine component in the finish and smell;
and wherein more preferably said wine, sparkling wine or champaign yeast is a top-fermenting champaign yeast, preferably a champaign yeast which has the yeast spectrum as shown in Table 1B, and more preferably is yeast strain Urbanus 2 (DSM 15018).

11. The process according to claim 10, wherein:
(i) at least one bottom-fermenting industrial yeast, especially a bottom-fermenting industrial yeast of type 34/70, 34/78, 44, 120, 128, 168, 172, 194, 199, 66, 71 or 167 is used in said secondary fermentation step in addition to said champaign yeast; and/or
(ii) said secondary fermentation step is performed at a temperature of from 5 to 28 °C, preferably from 10 to 20 °C; and/or
(iii) the proportion of said saved wort or krausen beer in the total secondary fermentation volume is from 5 to 20%, preferably from 8 to 14%, by volume; and/or
(iv) the CO₂ content of said bottom-fermented beer is from 3 to 12, preferably from 6 to 9, g/l.

12. The process according to one or more of claims 3 to 6 or 7 to 11, wherein said beer is filled in bottles or barrels after the addition of said saved wort or after completion of said secondary fermentation step.

13. A beer which can be produced by a process according to one or more of claims 1 to 12.

## Revendications

1. Procédé de préparation d'une bière, comprenant la conversion d'un moût pendant une étape de fermentation principale haute et/ou basse avec une levure de service pour fermentation haute et/ou fermentation basse en présence d'au moins une levure de vin, de mousseux ou de champagne, sans addition d'autres sources de sucres fermentescibles.

2. Procédé selon la revendication 1, dans lequel le moût est un moût de fermentation haute et/ou de fermentation basse en 100 % de malt de froment et/ou en 100 % de malt d'orge ou en d'autres malts et/ou en mélanges de ces derniers qui conviennent à la production de la bière.

3. Procédé selon la revendication 1 ou 2, dans lequel la bière est une bière de fermentation haute et le moût un moût de fermentation haute, dans lequel en particulier le moût de fermentation haute est un moût pour bière « blanche » ou bière de froment, en malt de froment ou en un mélange de malt de froment et d'une autre sorte de malt, en particulier du malt d'orge, du malt d'épeautre et/ou un autre malt qui convient à la production de la bière, ou un moût en malt d'orge ou un mélange de malt d'orge avec une des sortes de malt citées ci-avant,
et dans lequel, de préférence,
(i) comme levure de vin, de mousseux ou de champagne est utilisée une levure de vin, de mousseux ou de champagne à fermentation haute, en particulier une levure de vin, de mousseux ou de champagne qui est compatible avec d'autres levures utilisées dans le procédé de brasserie, en particulier avec la levure de service à fermentation haute de l'étape de fermentation principale, et qui, en particulier, n'engendre aucun métabolite toxique pour les autres levures ; et/ou
(ii) la levure de vin, de mousseux ou de champagne produit avec le substrat du moût à fermentation haute une saveur fruité et de bière avec une nette composante de vin / de mousseux après déglutition et dans le bouquet ;
et dans lequel, de façon particulièrement préférée, la levure de vin, de mousseux ou de champagne est une levure de champagne à fermentation haute, en particulier une levure de champagne qui présente le spectre de levures indiqué dans le tableau 1A, et dans lequel est utilisée encore plus préférablement une souche de levure Urbanus 1 (DSM 15017).

4. Procédé selon la revendication 3, dans lequel
(i) la levure de service à fermentation haute utilisée dans l'étape de fermentation principale à fermentation haute est du type 68, 127, 149, 175 ou 177, en particulier une levure de service du type 68 ou 175 ; et/ou
(ii) dans lequel l'étape de fermentation principale est effectuée à une température de 10 à 28, de préférence de 17 à 25 °C ; et/ou
(iii) dans lequel la teneur en moût original du moût avant la fermentation est de 6 à 18, de préférence de 9 à 13 % en poids d'extrait fermentescible.

5. Procédé selon la revendication 3 ou 4, comprenant une étape de deuxième fermentation moyennant l'addition d'un aliment, de préférence moyennant l'addition d'une bière de sédimentation à fermentation haute et/ou basse et/ou moyennant l'addition d'un moût à fermentation haute et/ou basse non fermenté mélangée de levure, de façon particulièrement préférée moyennant l'addition d'une bière de sédimentation à fermentation basse à base de moût d'orge ;
et dans lequel, de façon particulièrement préférée
(i) l'étape de deuxième fermentation s'effectue moyennant l'addition d'au moins une autre levure de vin, de mousseux ou de champagne, de préférence d'une levure de vin, de mousseux ou de champagne à fermentation haute, qui produit avec le substrat du moût à fermentation haute une saveur fruité et de bière avec une nette composante de vin / de mousseux après déglutition et dans le bouquet ; ou
(ii) la levure de vin, de mousseux ou de champagne est une levure de champagne à fermentation haute, de préférence une levure de champagne qui présente le spectre de levures indiqué dans le tableau 1B, et de façon particulièrement préférée la souche de levure Urbanus 2 (DSM 15018).

6. Procédé selon la revendication 4 ou 5, dans lequel
(i) dans l'étape de deuxième fermentation, au moins une levure de service à fermentation haute et/ou basse est utilisée à côté de la levure de champagne, en particulier une levure de service à fermentation basse du type 34/70, 34/78, 44, 120, 128, 168, 172, 194, 199, 66, 71 ou 167 ; et/ou
(ii) dans lequel l'étape de deuxième fermentation est effectuée à une température de 10 à 28, de préférence de 15 à 25 °C ; et/ou
(iii) la proportion de l'aliment ou de la bière de sédimentation au total du volume de deuxième fermentation est de 5 à 20, de préférence de 8 à 15 % en volume ; et/ou
(iv) la teneur en CO₂ de la bière de fermentation haute est de 3 à 12, de préférence de 6 à 9 g/l.

7. Procédé selon la revendication 1 ou 2, dans lequel la bière est une bière de fermentation basse et le moût un moût de fermentation basse,
et dans lequel, de préférence, une levure de service pour fermentation basse est utilisée dans l'étape de fermentation principale basse, à côté de la levure de champagne.

8. Procédé selon la revendication 7, dans lequel
(i) comme levure de vin, de mousseux ou de champagne est utilisée une levure de vin, de mousseux ou de champagne pour fermentation haute qui est compatible avec les autres levures utilisées dans le procédé de brasserie, en particulier avec la levure de service pour fermentation basse de l'étape de fermentation principale, et qui n'engendre en particulier aucun métabolite toxique pour les autres levures ; et/ou
(ii) la levure de vin, de mousseux ou de champagne à fermentation haute produit avec le substrat du moût à fermentation basse une saveur fruité et de bière avec une nette composante de vin / de mousseux après déglutition et dans le bouquet ;
et dans lequel, de façon particulièrement préférée, la levure de vin, de mousseux ou de champagne est une levure de champagne pour fermentation haute, de préférence une levure de champagne qui présente le spectre de levures indiqué dans le tableau 1A, et de façon particulièrement préférée la souche de levure Urbanus 1 (DSM 15017).

9. Procédé selon la revendication 7 ou 8, dans lequel
(i) est utilisée dans l'étape de fermentation principale une levure de service à fermentation basse du type 34/70, 34/78, 44, 120, 128, 168, 172, 194 ou 199, respectivement une levure de service à fermentation basse (levure en poudre) du type 66, 71 ou 167, en particulier du type 34/70 ; et/ou
(ii) dans lequel l'étape de fermentation principale est effectuée à une température de 5 à 28, de préférence de 10 à 20 °C ; et/ou
(iii) dans lequel la teneur en moût original du moût avant la fermentation est de 6 à 18, de préférence de 9 à 14 % en poids d'extrait fermentescible.

10. Procédé selon l'une ou plusieurs des revendications 7 à 9, comprenant une étape de deuxième fermentation moyennant l'addition d'un aliment, de préférence moyennant l'addition d'une bière de sédimentation à fermentation basse et/ou moyennant l'addition d'un moût non fermenté mélangé de levure, de façon particulièrement préférée moyennant l'addition d'une bière de sédimentation à fermentation basse à base de moût d'orge et/ou d'un mélange de ces derniers ;
et dans lequel de préférence l'étape de deuxième fermentation s'effectue moyennant l'addition d'au moins une autre levure de vin, de mousseux ou de champagne, de préférence une levure de vin, de mousseux ou de champagne à fermentation haute produisant avec le substrat du moût à fermentation basse une saveur fruité et de bière avec une nette composante de vin / de mousseux après déglutition et dans le bouquet ;
et dans lequel, de façon particulièrement préférée, la levure de vin, de mousseux ou de champagne est une levure de champagne à fermentation haute, de préférence une levure de champagne qui présente le spectre de levures indiqué dans le tableau 1B, et de façon particulièrement préférée la souche de levure Urbanus 2 (DSM 15018).

11. Procédé selon la revendication 10, dans lequel
(i) dans l'étape de deuxième fermentation, à côté de la levure de champagne est utilisée au moins une levure de service à fermentation basse, en particulier une levure de service à fermentation basse du type 34/70, 34/78, 44, 120, 128, 168, 172, 194, 199, 66, 71 ou 167 ; et/ou
(ii) dans lequel l'étape de deuxième fermentation est effectuée à une température de 5 à 28, de préférence de 10 à 20 °C ; et/ou
(iii) la proportion de l'aliment ou de la bière de sédimentation au total du volume de deuxième fermentation est de 5 à 20, de préférence de 8 à 14 % en volume ; et/ou
(iv) la teneur en CO₂ de la bière de fermentation basse est de 3 à 12, de préférence de 6 à 9 g/l.

12. Procédé selon l'une ou plusieurs des revendications 3 à 6 ou 7 à 11, dans lequel, après l'addition de l'aliment ou après l'achèvement de l'étape de deuxième fermentation, la bière est mise en bouteilles ou en fûts.

13. Bière qui peut être produite par un procédé selon une ou plusieurs des revendications 1 à 12.
